# EUROPÄISCHE PATENTSCHRIFT

(11) **EP 1 624 975 B1**
(45) Veröffentlichungstag und Bekanntmachung des Hinweises auf die Patenterteilung: **04.04.2007**
(21) Anmeldenummer: 04739225.3
(22) Anmeldetag: 17.05.2004
(51) Int. Cl.: B05D 7/06, B05D 5/06, B05D 7/00

(54) **VERFAHREN ZUM BILDHAFTEN FÄRBEN VON HOLZOBERFLÄCHEN**
METHOD FOR THE PICTORIAL COLORING OF WOOD SURFACES
PROCEDE DE COLORATION PICTURALE DE SURFACES DE BOIS

(30) Priorität: 19.05.2003 DE 10322767
(43) Veröffentlichungstag der Anmeldung: 15.02.2006
(73) Patentinhaber: Kerle, Thomas, D-90765 Fürth (DE)
(72) Erfinder: Kerle, Thomas, D-90765 Fürth (DE)
(74) Vertreter: Tergau & Pohl Patentanwälte
(86) Internationale Anmeldenummer: PCT/EP2004/005269
(87) Internationale Veröffentlichungsnummer: WO 2004/101176

(56) Entgegenhaltungen:
- EP-A- 1 092 479
- DE-A- 2 603 114
- US-A- 5 932 350
- US-A1- 2002 081 393

## Beschreibung

Die Erfindung betrifft ein Verfahren zum intarsienartigen Färben von Holzoberflächen. Ein derartiges Verfahren wird im Weiteren auch als Verfahren zur Herstellung technischer Intarsien bezeichnet.

Ein Verfahren zum Färben von Holz ist beispielsweise aus der DE 36 18 463 A1 bekannt. Das zu färbende Werkstück wird hierbei mit einem Beizenfarbstoff getränkt. Die Erzeugung bildhafter, strukturierter Oberflächen, die den Eindruck von Intarsien hervorrufen könnten, ist nach diesem Verfahren nicht vorgesehen.

Unter Intarsien werden üblicherweise Einlegearbeiten andersfarbigen Holzes oder anders gearteten Materials, wie beispielsweise Schildpatt, Perlmutt, Metall oder Glas, in Vertiefungen verstanden, die aus massivem Holz herausgearbeitet sind. Eine andere Intarsientechnik ist das Auflegen eines Zierfumiers auf einen Holzkern, wobei das Zierfumier aus verschiedenfarbigem oder verschiedenartigem Material zugesammengesetzt ist. Im 18. Jahrhundert wurden diese Intarsientechniken von der sogenannten Intarsienmalerei abgelöst. Diese basiert darauf, dass mit Wasserfarben aufgetragene Ornamente durch einen Leim- oder Politurauftrag befestigt werden.

Die deutsche Offenlegungsschrift DE 26 03 114 beschreibt ein Verfahren zum Herstellen von intarsienartigen Drucken auf Holz. Wesentlich bei diesem Verfahren ist, dass es sich um ein Druckverfahren handelt. Mit anderen Worten wird der Eindruck einer Intarsia dadurch erzeugt, dass Druckfarbe auf die Oberfläche des zu bedruckenden Holzes aufgebracht wird. Vom Gesamteindruck her sind solche intarsienartigen Drucke nicht mit einer tatsächlichen Intarsienarbeit zu vergleichen, weshalb sich das genannte Verfahren auch nicht am Markt durchgesetzt hat.

Aufgabe der vorliegenden Erfindung ist es, auf zeitgemäße Art und Weise qualitativ hochwertige technische Intarsien, das heißt bildhaft gefärbte Holzoberflächen, zu schaffen, die schnell und preiswert herstellbar sind. Diese Aufgabe wird durch ein Verfahren nach Anspruch 1 sowie durch ein Holzsubstrat nach Anspruch 14 gelöst.

Zur Lösung dieser Aufgabe wird ein Verfahren bereitgestellt, bei welchem in einem ersten Schritt eine Beize auf ein Holzsubstrat aufgebracht wird. Das Holzsubstrat kann hierbei aus Voll holz oder aber aus einem kaschierten oder unkaschierten Holzwerkstoff bestehen. Unter Holzwerkstoff wird dabei beispielsweise eine Spanplatte, eine Holzfaserplatte oder Sperrholz, insbesondere eine Furnier- oder Tischlerplatte, verstanden. Die Beize enthält Acrylate und/oder Polyacrylate und kann auf das Holzsubstrat gestrichen, gepinselt, gerakelt, gerollt, gesprüht oder anderweitig, beispielsweise durch Eintauchen, aufgebracht werden. In der sich anschließenden Trocknungszeit verteilt sich die Beize im Holzsubstrat und verbindet sich mit der Holzoberfläche. Als Beize wird eine Flüssigkeit oder Suspension verwendet, welche in ihrer chemischen Zusammensetzung eine Reaktion mit dem Holzsubstrat und dem anschließend in einem weiteren Schritt auf das Holzsubstrat aufgebrachten Farbstoff und damit eine Färbung des Holzes ermöglicht. Das Ergebnis wird als technische Intarsia bezeichnet.

Als Farbstoffe werden sogenannte Beizenfarbstoffe verwendet, die sich völlig überraschend als besonders gut geeignet zur Herstellung technischer Intarsien herausgestellt haben. Unter Beizenfarbstoffe wird eine seit dem Mittelalter viel benutzte, heute jedoch wegen des technisch notwendigen Aufwands seltener eingesetzte Gruppe von Farbstoffen verstanden. Beizenfarbstoffe gehören verschiedenen Stoffklassen an und wurden bisher fast ausschließlich in der Textindustrie, vorwiegend zum Färben von Wolle, Seide, Zellulosefaserstoffen und anderen Eiweißfaserstoffen verwendet. Mit den vorliegend verwendeten Beizenfarbstoffen nicht zu verwechseln sind die sogenannten Farbstoffbeizen, welche als Färbemittel für Holz seit langem bekannt sind.

Vorteilhafte Weiterbildungen der Erfindung ergeben sich aus den Unteransprüchen. Die Ansprüche 2 bis 7 betreffen dabei besonders bevorzugte Ausführungsformen der Erfindung, bei denen die Verwendung einer ausgewählten Beize dazu beiträgt, dass das erfindungsgemäße Verfahren besonders umweltfreundlich ist. Die verwendete Beize ist vorzugsweise ölfrei und weist, mit Ausnahme von Wasser, keinerlei anorganische Bestandteile, wie beispielsweise Chrom, Nickel oder Silizium auf. Die Verwendung giftiger Lösemittel ist daher nicht erforderlich. Der Feststoffanteil in der Beize bewegt sich vorzugsweise im Bereich zwischen 30 % und 70 %. Als besonders vorteilhaft hat sich ein Feststoffanteil von etwa 60 bis 65 % erwiesen. Auch bei einem geringen Feststoffanteil von etwa 30 % werden jedoch, je nach Anwendungsfall, noch qualitativ ausreichende Ergebnisse erzielt. Durch die Verwendung einer Beize auf Wasserbasis kann das erfindungsgemäße Verfahren auch in kritischen Anwendungsgebieten, beispielsweise im Lebensmittelbereich, angewendet werden. Die wasserlösliche Beize ist giftfrei und biologisch abbaubar, so dass insbesondere auch die Entsorgung von Restbeständen problemlos möglich ist. Besonders gute Ergebnisse werden mit Beizen erzielt, die Acrylate oder Polyacrylate als wesentliche Bestandteile enthalten. In einem bevorzugten Ausführungsbeispiel der Erfindung wird die fertige Beize aus einem Beizenkonzentrat gewonnen, welches mit Wasser verdünnt wird. Das Beizenkonzentrat besteht dabei vorzugsweise aus 60 bis 90 Gew.-% Ethylacrylat und 10 bis 40 Gew.-% Butylacrylat gemischt mit Wasser bei einem Feststoffanteil von, etwa 63 %. Dieses Konzentrat wird dann vor der Anwendung im Verhältnis 1:3 bis 1:5 mit Wasser verdünnt. In der Mischung von Acrylaten und Wasser können Polymerisations reaktionen stattfinden, so dass sich der Wasser- beziehungsweise Feststoffgehalt der durch Verdünnung gewonnenen Mischung nicht notwendigerweise arithmetisch aus der Zusammensetzung der Ausgangsstoffe ergibt.

Als Beizenfarbstoffe werden vorzugsweise Anthrachinon-, insbesondere Alizarin-Farbstoffe verwendet (Ansprüche 8 und 9). Von Vorteil bei diesen Farbstoffen ist es, dass sie frei von Halogenen und Aminen sind, und daher weder krebserregend noch gesundheitsgefährdend sind. Sämtliche, bei dem erfindungsgemäßen Verfahren genutzten Stoffe sind somit unter Umwelt- bzw. gesundheitlichen Gesichtspunkten unbedenklich.

Das Aufbringen des Beizenfarbstoffes auf das Holzsubstrat erfolgt vorteilhafterweise gemäß dem in den Patentansprüchen 10 bis 13 beschriebenen Verfahren. Von Vorteil ist insbesondere ein Aufdampfen des Beizenfarbstoffes, wobei der Beizenfarbstoff durch Sublimation in den gasförmigen Zustand überführt wird. Besonders vorteilhaft in diesem Zusammenhang ist die Verwendung eines Zwischenträgers, insbesondere in Form eines mit dem Beizenfarbstoff versehenes, insbesondere beschichtetes Sublimationselements. Das Aufbringen des Beizenfarbstoffes auf das Holzsubstrat erfolgt in diesen Fällen vorzugsweise mit Hilfe einer Presse, beispielsweise einer Furnierpresse, wie sie beispielsweise von Tischlern verwendet wird. Unter dem Einfluss der erforderlichen Druck- und Temperaturwerte findet eine Sublimation der Beizenfarbstoffe statt. Die Beizenfarbstoffe werden vom Sublimationselement, das zuvor auf das zu färbende Holzsubstrat gelegt wurde, gelöst und auf das Holzsubstrat aufgebracht. Das Sublimationselement dient dabei als Trägermaterial für die Beizenfarbstoffe. Gleichzeitig verdampft das Wasser aus der zuvor aufgetragenen Beize. Beize, Beizenfarbstoff und Holzsubstrat verbinden sich reaktiv derart, dass sich nach dem Abschluss des Pressvorganges der Farbstoff fest und unwiederbringlich im Holz befindet. Im Anschluss an das Aufbringen des Beizenfarbstoffes kann eine dünne Schutzschicht oder ein Lack, beispielsweise PUR auf das Holzsubstrat aufgebracht werden, um die Oberfläche gegen Umwelteinflüsse und Abnutzung zu schützen.

Durch das vorliegende Verfahren wird ein besonders umweltfreundliches und damit zeitgemäßes Färben von Holz ermöglicht. Zugleich ist das Verfahren gesundheitlich völlig unbedenklich. Im Gegensatz zu allen bisher bekannten Verfahren erfolgt keine Abdeckung oder Versiegelung der Holzoberfläche durch einen Farbdruck. Vielmehr erfolgt das Färben durch ein Eindringen der verwendeten Stoffe in das Holz, wodurch qualitativ hochwertige technische Intarsien erzeugt werden können. Ein besonderes Merkmal der Färbeergebnisse ist dabei, dass der Oberflächencharakter und die Haptik des Holzes vollumfänglich erhalten bleiben. Farb- und Lichtechtheit der so hergestellten technischen Intarsien entsprechen denen von Druckverfahren.

Mit dem vorliegenden Verfahren ist es nicht nur möglich, Holzsubstrate großflächig mit einer einheitlichen Farbgebung zu versehen. Auch das Aufbringen von Bildmotiven mit sehr feinen Motivstrukturen in der Größenordnung von wenigen Millimetern ist möglich, ohne dass ein Ineinanderfließen der Farben erfolgt. Das Verfahren ist besonders einfach durchzuführen und damit kostengünstig. Es kann unter Verwendung bereits vorhandener Arbeitsmaschinen und Vorrichtungen durchgeführt werden, wodurch eine Einführung des Verfahrens bzw. eine Umstellung von bisherigen Verfahren auf das erfindungsgemäße Verfahren ohne größere Investitionskosten möglich ist. Die optisch sehr ansprechenden Ergebnisse kommen herkömmlichen Intarsien sehr nahe, sind jedoch in ihrer Herstellung um ein vielfaches preiswerter, da eine Serienfertigung problemlos möglich ist.

Holzsubstrate mit technischen Intarsien, wie sie mit einem Verfahren nach einem der Ansprüche 1 bis 13 hergestellt werden, sind preiswert herzustellen und vielseitig verwendbar. Derartige Holzsubstrate können beispielsweise bei der Herstellung von Zier- oder Gebrauchsmöbeln sowie im Baugewerbe oder in anderen Anwendungsgebieten, in denen eine gefärbte Holzoberfläche gewünscht ist, eingesetzt werden.

Im nachfolgenden wird die Erfindung anhand eines Ausführungsbeispiels beschrieben, das anhand der Abbildungen näher erläutert wird. Hierbei zeigt:
- Fig. 1: ein Ablaufdiagramm, des erfindungsgemäßen Verfahrens und
- Fig. 2: eine schematische Darstellung des mit dem erfindungsgemäßen Verfahren gefärbter. Holzsubstrates.

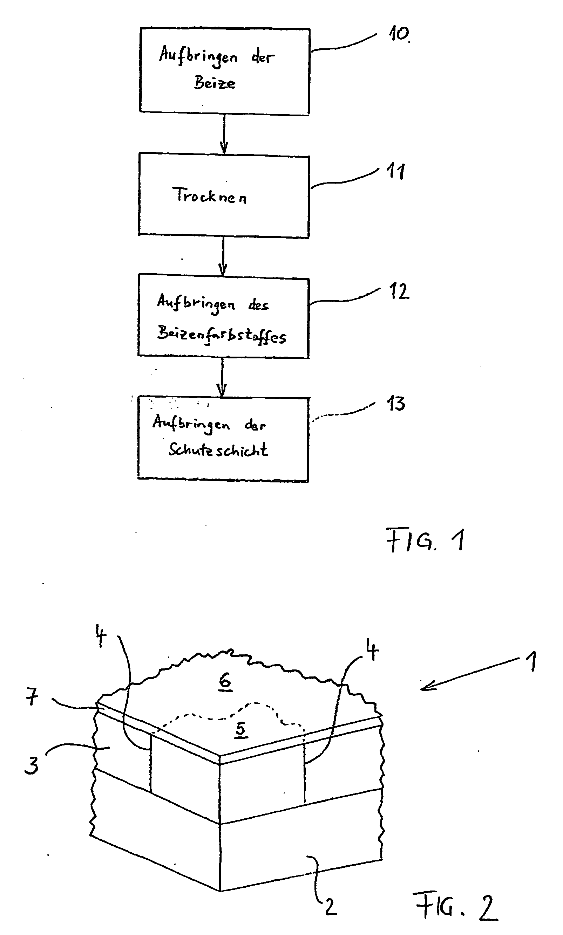

Fig. 1 zeigt ein schematisch stark vereinfachtes Ablaufdiagramm des erfindungsgemäßen Verfahrens. In einem ersten Schritt 10 wird dabei eine ölfreie, wasserlösliche Beize auf ein Holzsubstrat in Form einer Fumierplatte durch Sprühen aufgebracht. Die Beize ist frei von anorganischen Bestandteilen und wird aus einem im Verhältnis von 1:4 mit Wasser verdünnten Beizenkonzentrat gewonnen, das bei einem Feststoffanteil von 63 % aus 70 Gew.-% Ethylacrylat und 30 Gew.-% Butylacrylat besteht. Nach dem Aufbringen der Beize auf das Holzsubstrat erfolgt in einem nächsten Schritt 11 ein Trocknen der in die Substratoberfläche eingedrungenen Beize. Das Trocknen erfolgt vorzugsweise bei Raumtemperatur, so dass für die Trocknung keine Energiekosten anfallen. Der Trocknungsvorgang kann alternativ dazu auch bei erhöhten Temperaturen, beispielsweise im Bereich von 100°C bis 150 °C stattfinden. Je nach Trocknungstemperatur beträgt die Trocknungszeit zwischen wenigen Minuten und einigen Stunden.

Nach dem Trocknen wird ein Alizarin-Farbstoff auf das Holzsubstrat aufgebracht. Das Aufbringen erfolgt in Schritt 12 unter Verwendung einer üblichen Furnierpresse. Typische Pressenparameter sind dabei beispielsweise ein Pressendruck von 5 bis 15 bar sowie eine Temperatur von beispielsweise 180°C, welche durch eine elektrische Beheizung der Presse erzielt werden kann. Anstelle einer Fumierpresse können selbstverständlich auch andere geeignete Pressen oder Vorrichtungen verwendet werden, die ein Verdampfen der Beizenfarbstoffe und eine Verdichtung der Farbstoffe in das Holzsubstrat sowie eine reaktive Verbindung zwischen der Beize, den Beizenfarbstoffen und dem Holz ermöglichen.

Anstelle der Verdampfung der Beizenfarbstoffe auf das Holzsubstrat mittels eines Zwischenträgers kann selbstverständlich auch ein direktes Aufdampfen auf das Holzsubstrat erfolgen. In einem abschließenden Schritt 13 wird schließlich eine PUR-Schutzschicht auf die gefärbte Oberfläche des Holzsubstrats aufgebracht, wobei die Oberfläche gegen Umwelteinflüsse geschützt wird.

Fig. 2 zeigt schließlich eine stark vereinfachte Abbildung eines Holzsubstrates 1 in Form einer Fumierplatte, die mit technischen Intarsien versehen ist, welche mit dem erfindungsgemäßen Verfahren hergestellt wurden.

Das Holzsubstrat besteht im Wesentlichen aus einem Fumierträger 2, auf dessen Oberseite ein Furnier 3, beispielsweise ein Ahomfumier, auf übliche Art und Weise angebracht ist. Die im Schritt 10 bzw. 12 auf das Holzsubstrat 1 aufgebrachten Beizen bzw. Beizenfarbstoffe sind in das Furnier 3 eingedrungen und mit dem Holz eine Verbindung eingegangen. Eine scharfe Trennlinie 4 trennt dabei Fumierbereiche 5, 6 unterschiedlicher Farbe. Auf das Furnier 3 ist schließlich eine PUR-Schutzschicht 7 aufgebracht, die das Holzsubstrat 1 nach außen abschließt.

## Patentansprüche

1. Verfahren zum intarsienartigen Färben eines Holzsubstrats (1), bei dem in einem ersten Schritt (10) eine Acrylate oder Polyacrylate enthaltende Beize auf das Holzsubstrat (1) aufgebracht wird und in einem weiteren Schritt (12) zur Erzeugung einer Motivstruktur ein Beizenfarbstoff auf das Holzsubstrat (1) aufgebracht wird, der sich reaktiv mit dem Holzsubstrat (1) und der in das Holzsubstrat (1) eingedrungenen Beize verbindet.

2. Verfahren nach Anspruch 1,
**dadurch gekennzeichnet,**
**dass** die Beize aus einem Ethylacrylat und Butylacrylat enthaltenden Gemisch hergestellt wird.

3. Verfahren nach Anspruch 1 oder 2,
**dadurch gekennzeichnet,**
**dass** die Beize ölfrei ist.

4. Verfahren nach einem der Ansprüche 1 bis 3,
**dadurch gekennzeichnet,**
**dass** die Beize frei von anorganischen Bestandteilen ist.

5. Verfahren nach einem der Ansprüche 1 bis 4,
**dadurch gekennzeichnet,**
**dass** die Beize aus einem Beizenkonzentrat mit einem Feststoffanteil von unter 70 % gewonnen wird.

6. Verfahren nach einem der Ansprüche 1 bis 5,
**dadurch gekennzeichnet,**
**dass** die Beize aus einem Beizenkonzentrat mit einem Feststoffanteil von wenigstens 30 % gewonnen wird.

7. Verfahren nach einem der Ansprüche 1 bis 6,
**dadurch gekennzeichnet,**
**dass** die Beize wasserlöslich ist.

8. Verfahren nach einem der Ansprüche 1 bis 7,
**gekennzeichnet durch**
einen Anthrachinon-Farbstoff als Beizenfarbstoff.

9. Verfahren nach Anspruch 8,
**gekennzeichnet durch**
einen Alizarin-Farbstoff als Beizenfarbstoff.

10. Verfahren nach einem der Ansprüche 1 bis 9,
**gekennzeichnet durch**
ein Aufdampfen des Beizenfarbstoffes auf das Holzsubstrat (1).

11. Verfahren nach Anspruch 10,
**gekennzeichnet durch**
die Verwendung eines Zwischenträgers.

12. Verfahren nach Anspruch 11,
**gekennzeichnet durch**
ein mit dem zur Überführung in den gasförmigen Zustand vorgesehenen Beizenfarbstoff versehenes Sublimationselement als Zwischenträger.

13. Verfahren nach Anspruch 11 oder 12,
**gekennzeichnet durch**
die Verwendung einer vorzugsweise beheizbaren Presse.

14. Holzsubstrat (1) mit einer intarsienartigen Farbgebung, hergestellt durch
ein Verfahren nach einem der Ansprüche 1 bis 13.

## Claims

1. Method for inlay-like coloration of a wood substrate (1), in which a stain containing acrylates or polyacrylates is applied to the wood substrate (1) in a first step (10) and, in a further step (12) for producing a motif structure, a mordant dye which reactively binds with the wood substrate (1) and with the stain which has penetrated into the wood substrate (1) is applied to the wood substrate (1).

2. Method according to Claim 1, **characterized in that** the stain is produced from a mixture containing ethyl acrylate and butyl acrylate.

3. Method according to Claim 1 or 2, **characterized in that** the stain is oil-free.

4. Method according to any of Claims 1 to 3, **characterized in that** the stain is free of inorganic components.

5. Method according to any of Claims 1 to 4, **characterized in that** the stain is obtained from a stain concentrate having a solids content of less than 70%.

6. Method according to any of Claims. 1 to 5, **characterized in that** the stain is obtained from a stain concentrate having a solids content of at least 30%.

7. Method according to any of Claims 1 to 6, **characterized in that** the stain is water-soluble.

8. Method according to any of Claims 1 to 7, **characterized by** an anthraquinone dye as the mordant dye.

9. Method according to Claim 8, **characterized by** an alizarin dye as the mordant dye.

10. Method according to any of Claims 1 to 9, **characterized by** vapour deposition of the mordant dye onto the wood substrate (1).

11. Method according to Claim 10, **characterized by** the use of an intermediate carrier.

12. Method according to Claim 11, **characterized by**, as an intermediate carrier, a sublimation element provided with the mordant dye intended for conversion into the gaseous state.

13. Method according to Claim 11 or 12, **characterized by** the use of a preferably heatable press.

14. Wood substrate (1) having an inlay-like coloration, produced by a method according to any of Claims 1 to 13.

## Revendications

1. Procédé pour la coloration de type marqueterie d'un substrat en bois (1), où, dans une première étape (10), un mordant contenant des acrylates ou des polyacrylates est appliqué sur le substrat en bois (1) et, dans une autre étape (12), pour la production d'une structure de motif, un colorant à mordant qui se lie de manière réactive avec le substrat en bois (1) et avec le mordant qui a pénétré dans le substrat en bois (1) est appliqué sur le substrat en bois (1).

2. Procédé selon la revendication 1, **caractérisé en ce que** le mordant est produit à partir d'un mélange contenant de l'acrylate d'éthyle et l'acrylate de butyle.

3. Procédé selon la revendication 1 ou 2, **caractérisé en ce que** le mordant est sans hulle.

4. Procédé selon l'une des revendications 1 à 3, **caractérisé en ce que** le mordant est dépourvu de constituants inorganiques.

5. Procédé selon l'une des revendications 1 à 4, **caractérisé en ce que** le mordant est obtenu à partir d'un concentré de mordant ayant une fraction de solides inférieure à 70 %.

6. Procédé selon l'une des revendications 1 à 5, **caractérisé en ce que** le mordant est obtenu à partir d'un concentré de mordant ayant une fraction de solides d'au moins 30 %.

7. Procédé selon l'une des revendications 1 à 6, **caractérisé en ce que** le mordant est soluble dans l'eau.

8. Procédé selon l'une des revendications 1 à 7, **caractérisé par** un colorant de type anthraquinone comme colorant à mordant.

9. Procédé selon la revendication 8, **caractérisé par** un colorant de type alizarine comme colorant à mordant.

10. Procédé selon l'une des revendications 1 à 9, **caractérisé par** une évaporation du colorant à mordant sur le substrat en bois (1).

11. Procédé selon la revendication 10, **caractérisé par** l'utilisation d'un support intermédiaire.

12. Procédé selon la revendication 11, **caractérisé par** un élément de sublimation muni du colorant à mordant prévu pour le passage à l'état gazeux comme support intermédiaire.

13. Procédé selon la revendication 11 ou 12, **caractérisé par** l'utilisation d'une presse de préférence chauffable.

14. Substrat en bois (1) avec une coloration de type marqueterie produit par un procédé selon l'une des revendications 1 à 13.
